# EUROPÄISCHE PATENTSCHRIFT

(11) **EP 1 505 330 B1**
(45) Veröffentlichungstag und Bekanntmachung des Hinweises auf die Patenterteilung: **25.04.2007**
(21) Anmeldenummer: 04015292.8
(22) Anmeldetag: 30.06.2004
(51) Int. Cl.: F16L 27/04

(54) **Rohrschelle**
Pipe clamp
Collier de serrage pour tuyaux

(30) Priorität: 08.08.2003 DE 10336351
(43) Veröffentlichungstag der Anmeldung: 09.02.2005
(73) Patentinhaber: Rasmussen GmbH, 63477 Maintal (DE)
(72) Erfinder: Geppert, Helmut, 63791 Karlstein (DE); Wolf, Heinz-Peter, 63628 Bad Soden Salmünster (DE); Mann, Stephan, 63599 Bieber (DE); Sommer, Michael, 63654 Büdingen (DE)
(74) Vertreter: Knoblauch, Andreas

(56) Entgegenhaltungen:
- DE-A- 19 904 409
- DE-B- 1 101 066
- DE-C- 434 908
- DE-C- 3 404 739
- DE-C- 19 822 915
- GB-A- 2 037 922
- US-A1- 2002 171 244

## Beschreibung

Die Erfindung betrifft eine Verbindungsanordnung aus einer Rohrschelle und zwei Rohren, insbesondere Rohren einer Kraftfahrzeug-Abgasrohrleitung, die teilweise ineinander steckbare Endabschnitte aufweisen, einen Einsteck- und einen Aufnahme-Endabschnitt, wobei der Einsteck-Endabschnitt in zwei Kugelzonen unterteilt ist, von denen die an das freie Ende des Einsteck-Endabschnitts angrenzende erste Kugelzone einen Außenradius hat, der gleich dem Innenradius des ebenfalls als Kugelzone geformten Aufnahme-Endabschnitts ist, und in den Aufnahme-Endabschnitt einsteckbar ist, und die zweite Kugelzone des Einsteck-Endabschnitts einen Au-βenradius hat, der gleich dem Außenradius des Aufnahme-Endabschnitts ist, wobei die Rohrschelle ein bei zusammengesteckten Rohren um den Aufnahme-Endabschnitt und die zweite Kugelzone herumlegbares Schellenband, das um eine Querachse gekrümmt ist, die bei koaxial zusammengesteckten Rohren und an den Endabschnitten der Rohre ungespannt anliegendem Schellenband in einer senkrecht zu den koaxialen Mittelachsen der Rohre stehenden Mittelebene des Schellenbandes liegt, mit nach außen abstehenden Spannbacken und eine durch Löcher in den Spannbacken hindurchgeführte Spannschraube aufweist, die sich einerseits mit einem Kopf an der einen der einander abgekehrten Seiten der Spannbacken und andererseits über ein mit einer Gewindebohrung versehenes Zwischenteil, in dessen Gewindebohrung die Spannschraube eingreift, an der anderen Seite abstützt.

Bei einer bekannten, in Abgasrohrleitungen von Kraftfahrzeugen verwendeten Verbindungsanordnung dieser Art greift die erste Kugelzone des Einsteck-Endabschnitts in die Kugelzone des Aufnahme-Endabschnitts ein. Die Dichtigkeit der Verbindungsanordnung beruht nur auf einer genau passenden gegenseitigen Anlage der ineinander greifenden Kugelzonen. Die Dichtigkeit ist daher bei einem hohen Fluiddruck in den Rohren unzureichend. Die Spannbacken sind in ähnlicher Weise wie die Spannbacken bei der Schelle nach der DE 34 04 739 C1 ausgebildet und mit dem Schellenband durch Punktschweißung verbunden. Die Spannschraube ist von vornherein annähernd entsprechend dem Umkreis der zu verbindenden Rohre gekrümmt. Ohne Krümmung kann es, bedingt durch die in Umfangsrichtung der Schelle von deren Spalt weit entfernt liegenden Stützkanten der Spannbacken, insbesondere bei kleinen Krümmungsradien der Kugelzonen, einen Kontakt der Spannschraube mit der Rohraußenfläche geben, was zu einer Beschädigung des Gewindes der Spannschraube führen kann. Im Extremfall kann sich die Spannschraube beim Spannen krümmen und dadurch das Spannen erschweren. Das Anschweißen der Spannbacken ist nicht nur aufwendig, sondern beschädigt auch bei mit einer Schutzschicht gegen Korrosion versehenen Spannbändern die Schutzschicht. Zusätzlich bedürfen die Schweißstellen einer Festigkeitskontrolle.

Aus der GB-A-2 037 922 ist eine Verbindungsanordnung aus einer Rohrschelle und zwei Rohren bekannt. Die zu verbindenden Endabschnitte der Rohre sind jeweils als Kugelzone ausgebildet. Die Kugelzonen haben jeweils den gleichen Krümmungsradius. Die Rohrschelle hat ein Schellenband, das ebenfalls eine Kugelzone bildet, deren innerer Krümmungsradius gleich dem äußeren Krümmungsradius der Kugelzonen der Rohre ist. Wenn die Rohre durch die Rohrschelle verbunden werden, legt sich das Schellenband ohne Änderung seiner sich um seine Querachse verlaufenden Krümmung an die Kugelzonen der Endabschnitte der Rohre an. Auch bei dieser Verbindungsanordnung beruht ihre Dichtigkeit nur auf einer genau passenden gegenseitigen Anlage des Schellenbands und der Kugelzonen der Rohre, d.h. einer engen Toleranz der Radien der aneinanderliegenden Flächen. Die Dichtigkeit der Verbindung ist daher ebenfalls bei einem hohen Fluiddruck in den Rohren unzureichend. Zusätzlich ist innerhalb der Kugelzonen der Rohre ein innen zylindrischer und außen mit zwei axial getrennten Flächen in Form von Kugelzonen versehener Ring angeordnet. Zwischen diesen Flächen liegt eine umlaufende Rippe des Ringes, die zwischen die freien Ränder der Kugelzonen der Rohre ragt. Auch die äußeren Flächen der Kugelzonen des Ringes haben den gleichen Krümmungsradius wie die Innenseiten der Kugelzonen der Rohre. Die Radien der aneinanderliegenden kugelzonenförmigen Flächen der Rohre und des Ringes müssen daher ebenfalls eng toleriert sein, um eine gewisse Dichtigkeit zu erreichen. Der Ring erhöht zudem den Aufwand.

Der Erfindung liegt die Aufgabe zugrunde, eine Verbindungsanordnung der gattungsgemäßen Art anzugeben, durch die die Dichtigkeit der Rohrverbindung bei hohen Innendrücken verbessert wird. Ferner soll die Herstellung der gattungsgemäßen Verbindungsanordnung vereinfacht und ihre Betriebssicherheit erhöht werden.

Erfindungsgemäß ist diese Aufgabe bei einer gattungsgemäßen Verbindungsanordnung dadurch gelöst, daß die Querachse, um die das ungespannte Schellenband gekrümmt ist, einen Abstand vom Mittelpunkt der Kugelzonen aufweist und der Innenradius der Krümmung des ungespannten Schellenbandes um diese Querachse um so viel kleiner als der erwähnte Außenradius der Kugelzonen ist, daß die Summe aus dem Abstand und dem Innenradius dieser Krümmung größer als der Außenradius der Kugelzonen ist.

Bei dieser Lösung liegt die Rohrschelle vor dem endgültigen Spannen nur mit ihren inneren Umfangsrändern an der Kugelzone des Aufnahme-Endabschnitts und an der zweiten Kugelzone des Einsteck-Endabschnitts an. Beim Spannen übt sie daher axial gegeneinander gerichtete Komponenten der Spannkraft aufgrund der runden Außenflächen der Kugelzonen auf die Rohre aus, bis das Schellenband unter geringfügiger Aufbiegung großflächig an den Kugelzonen anliegt. Die Rohre werden dadurch axial zusammengedrückt, so daß die ineinander gesteckten Kugelzonen ohne Dichtungsmittel weitgehend dicht aneinander anliegen.

Vorzugsweise sind zumindest die inneren Umfangsränder des Schellenbandes abgerundet. Sie können daher beim Spannen leichter auf den Außenflächen der Kugelzonen gleiten, ohne in die Außenflächen einzudringen. Mithin erhöht sich der Anpreßdruck der Rohrschelle an den Kugelzonen, ohne die Spannkraft der Rohrschelle beim Spannen erhöhen zu müssen. Darüber hinaus wird die Gefahr einer Beschädigung einer etwaigen Schutzschicht auf den Rohren vermindert.

Ferner sind die Spannbacken vorzugsweise einstückig mit dem Schellenband ausgebildet. Das Anschweißen der Spannbacken am Schellenband entfällt daher. Desgleichen können die Stützflächen der Spannbacken bei gleicher Spannweite wie bei der gattungsgemäßen Rohrschelle dichter beieinander liegen, so daß die Wahrscheinlichkeit geringer ist, daß die Spannschraube die Rohraußenfläche berührt und ihr Gewinde beschädigt würde.

Sodann können axiale Randbereiche der Spannbacken teilkreisförmig voneinander weggebogen sein und axial äußere, teilkreisförmig voneinander weggebogene Wände bilden, zwischen denen an der dem Spannschraubenkopf zugekehrten Seite der betreffenden Spannbacke sowie zwischen dieser Seite und dem Spannschraubenkopf ein zumindest auf seiner dieser Spannbacke zugekehrten Seite zylindrisches Gelenkteil drehbar anliegt, das ein durchgehendes Loch zur Durchführung des Spannschraubenschaftes aufweist, und daß das Zwischenteil ebenfalls zumindest auf seiner an der anderen Spannbacke anliegenden Seite zylindrisch ist und als Gelenkteil drehbar anliegt. Die Gelenkteile stellen, ähnlich wie bei einer Gelenkbolzenschelle, sicher, daß beim Spannen der Rohrschelle praktisch kein Biegemoment auf die Spannschraube ausgeübt wird und sich die Spannschraube nicht verbiegt. Ein vorheriges Verbiegen der Spannschraube entfällt folglich ebenfalls.

Die Gelenkteile können, je nach Höhe des Rohr-Innendrucks, dem die Rohrverbindung standhalten soll, als massive Gelenkbolzen oder als Gelenkhülsen ausgebildet sein.

Vorzugsweise ist zumindest die am Spannschraubenkopf anliegende Seite der voneinander abgekehrten Seiten der Gelenkteile eben. Dadurch ergibt sich auch bei einer hohen Spannkraft eine geringe Flächenpressung zwischen dem Spannschraubenkopf und dem anliegenden Gelenkteil.

Die Spannbacken können dachartige Vorsprünge aufweisen, deren First sich in Axialrichtung der Rohrschelle erstrecken und deren der jeweils anderen Spannbacke gegenüberliegenden Seiten zueinander hin geneigt sind, so daß sie jeweils mit einer Querebene der Spannschrauben einen spitzen Winkel einschließen. Beim Spannen der Rohrschelle stoßen die Spannbacken mit den Firsten aneinander, kurz bevor das Schellenband großflächig an den Kugelzonen anliegt. Durch weiteres Spannen der Rohrschelle kann sich das Schellenband schließlich großflächig an den Kugelzonen anlegen, ohne daß sich die Spannbacken großflächig berühren. Die Spannschraube steht daher im gespannten Zustand der Rohrschelle auch unter einer durch die Spannbacken ausgeübten Vorspannung, bedingt durch eine geringfügige Elastizität der Spannbacken. Die Gefahr, daß sich die Spannschraube durch Erschütterungen löst, zum Beispiel während der Fahrt eines Kraftfahrzeugs, deren Abgasrohrleitung mit der Rohrschelle versehen ist, ist daher minimiert.

Wenn die Firste der Vorsprünge kürzer als die Spannbakken in Axialrichtung breit sind, ergibt sich eine Spannbackenform, die aufgrund mehrerer Biegekanten in sich sehr steif ist und daher ohne bleibende Verformung auch hohen Spannkräften standhält.

Die Löcher in den Spannbacken sind vorzugsweise sich vom Schellenband nach außen erstreckende Langlöcher. Die Spannschraube kann sich daher beim Spannen der Rohrschelle nicht durch ein Biegemoment verbiegen, das beim Spannen der Rohrschelle durch die Lochränder auf die Spannschraube ausgeübt würde.

Die Rohrschelle kann eine Lasche aufweisen, mittels der die Rohrschelle an einem der Rohre zumindest bis zur Endmontage vormontiert oder die Rohrschelle ortsfest, insbesondere am Chassis eines Kraftfahrzeugs befestigt werden kann. Dadurch wird zum einen erreicht, daß die Rohrschelle einfacher montiert werden und zum anderen nicht verloren gehen kann, wenn sich die Spannschraube, zum Beispiel durch unzureichendes Spannen der Spannschraube, lösen sollte.

Die Lasche kann am Schellenband angeschweißt oder einstückig mit diesem ausgebildet sein. Diese Art der Verbindung zwischen Schellenband und Lasche hat gegenüber einer lösbaren Verbindung mittels Schrauben den Vorteil, daß sie sicherer und einfacher herstellbar ist.

Vorzugsweise ist das Schellenband mit Versteifungssikken versehen. Die Versteifungssicken erhöhen nicht nur die Biegefestigkeit und damit auch die Rückstellfähigkeit des Schellenbandes nach dem Spannen in ihre ursprüngliche Form beim Lösen der Rohrschelle, sondern auch die Vorspannung der Spannschraube im gespannten Zustand und damit die Sicherheit gegen ein Lösen der Spannschraube.

Sodann kann dafür gesorgt sein, daß die Spannbacke, an der sich das Zwischenstück abstützt, einen sich über das Zwischenstück hinaus erstreckenden und über dem das Zwischenstück durchsetzenden freien Endabschnitt des Schraubenschaftes gebogenen Fortsatz zum Einklemmen eines Halterungsteils zwischen Fortsatz und Spannschraubenschaft aufweist. Dadurch kann die Rohrschelle an einem ortsfesten Halterungsteil zum Aufhängen der Rohre auf einfache Weise befestigt werden.

Bei einer erfindungsgemäßen Verbindungsanordnung weist die an das freie Ende des Einsteck-Endabschnitts angrenzende erste Kugelzone wenigstens eine außen umlaufende Ringnut mit jeweils einem darin angeordneten Dichtring auf, der an der Innenseite des Aufnahmeabschnitts anliegt, um die Dichtheit der Verbindung weiter zu erhöhen.

Die Erfindung und ihre Weiterbildungen werden nachstehend anhand der beiliegenden Zeichnungen eines bevorzugten Ausführungsbeispiels und von Abwandlungen dieses Ausführungsbeispiels näher beschrieben. Darin stellen dar:
- Fig. 1: eine Seitenansicht einer erfindungsgemäßen Rohrschelle im ungespannten Zustand,
- Fig. 2: eine Draufsicht der Rohrschelle nach Fig. 1,
- Fig. 3: die Schnittfläche des Schnitts III-III nach Fig. 1 durch eine Spannbacke,
- Fig. 4: eine vergrößerte Ansicht des Ausschnitts X der Fig. 3,
- Fig. 5: die Ansicht einer Spannbacke mit eingeführter Spannschraube der Rohrschelle nach Fig. 1 im Schnitt V-V nach Fig. 1,
- Fig. 6: den Schnitt VI-VI der Fig. 1 in der um koaxial zusammengesteckte Rohre montierten Lage der Rohrschelle kurz vor dem endgültigen Spannen der Rohrschelle,
- Fig. 7: die gleiche Ansicht wie Fig. 6, jedoch im gespannten Zustand der Rohrschelle,
- Fig. 8: eine Abwandlung der Rohrschelle nach Fig. 1 mit einer am Schellenband angeschweißten Lasche in der Ansicht von links in Fig. 1,
- Fig. 9: eine Abwandlung der Rohrschelle nach Fig. 1 mit im Schellenband ausgebildeten Versteifungssicken,
- Fig. 10: den Schnitt X-X durch eine Versteifungssicke gemäß Fig. 9 in vergrößertem Maßstab,
- Fig. 11: einen Ausschnitt einer abgewandelten Rohrschelle nach Fig. 1 mit einer einstückig an dem einen Spannbackenende des Schellenbandes ausgebildeten Lasche,
- Fig. 12: die Ansicht der gemäß Fig. 11 abgewandelten Rohrschelle nach Fig. 1, von links in Fig. 1 gesehen,
- Fig. 13: einen Ausschnitt einer abgewandelten Rohrschelle nach Fig. 1 mit einer einstückig an dem einen Schellenbandende ausgebildeten, gewölbten Lasche, die ein am Schaft der gespannten Spannschraube anliegendes Sicherungsteil übergreift,
- Fig. 14: die Ansicht der gemäß Fig. 13 abgewandelten Rohrschellen nach Fig. 1, von links in Fig. 1 gesehen,
- Fig. 15: einen Ausschnitt einer abgewandelten Rohrschelle nach Fig. 1 mit einer einstückig an dem einen Spannbackenende des Schellenbandes ausgebildeten Lasche,
- Fig. 16: die Ansicht der gemäß Fig. 15 abgewandelten Rohrschelle nach Fig. 11, von links in Fig. 1 gesehen und
- Fig. 17: die eine Hälfte eines Axialschnitts durch eine erfindungsgemäße Verbindungsanordnung mit einer erfindungsgemäßen Rohrschelle und zusätzlich einem Dichtring zwischen den zusammengesteckten Kugelzonen der Rohre.

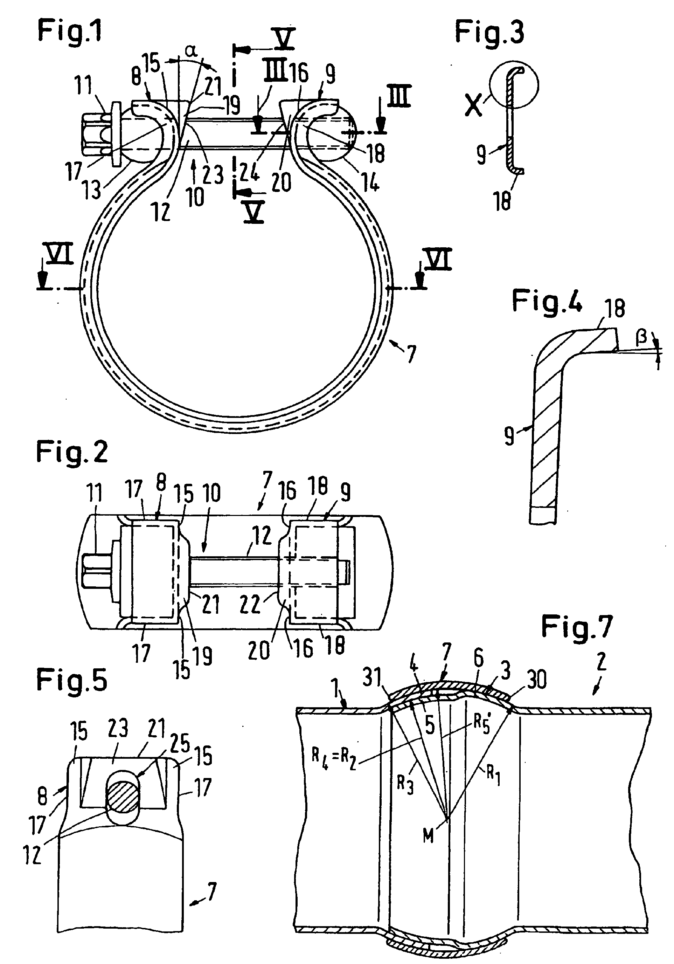

Die Rohrschelle nach den Figuren 1 bis 7 dient zum Verbinden zweier Rohre 1 und 2 in einer Abgas-Rohrleitung eines Kraftfahrzeuges. Die Rohre 1 und 2 haben teilweise ineinander steckbare Endabschnitte, einen Einsteck-Endabschnitt 3 und einen Aufnahme-Endabschnitt 4. Der Einsteck-Endabschnitt 3 wird durch zwei Kugelzonen 5 und 6 gebildet, die unterschiedliche Außenradien R₁ und R₂ aufweisen. Der Aufnahme-Endabschnitt 4 besteht aus nur einer Kugelzone, deren Außenradius R₃ gleich dem Außenradius R₁ der Kugelzone 6 und deren Innenradius R₄ gleich dem Außenradius R₂ der Kugelzone 5 ist. Die Kugelzonen haben den Zweck, die Rohre 1 und 2 vor dem Spannen der Rohrschelle in eine relativ zueinander geringfügig abgewinkelte Lage zu bringen.

Die Rohrschelle nach den Figuren 1 bis 7 weist ein im Axialschnitt tonnenartig nach außen gewölbtes Schellenband 7 auf, dessen Endabschnitte zu Spannbacken 8 und 9 geformt sind. Die Spannbacken 8 und 9 sind mithin einstückig mit dem Schellenband 7 ausgebildet. Ferner besitzt die Rohrschelle eine Spannschraube 10 mit einem Kopf 11 und einem mit Gewinde versehenen Schaft 12 sowie zwei massive Gelenkteile 13 und 14.

Die axial auseinanderliegenden Randbereiche 15 und 16 der Spannbacken 8 und 9 sind teilkreisförmig voneinander weggebogen und bilden axial äußere, teilkreisförmig voneinander weggebogene Wände 17 und 18. Zwischen den Wänden 17 liegt das Gelenkteil 13 an der dem Spannschraubenkopf 11 zugekehrten Seite der Spannbacke 8 an, und zwischen den Wänden 18 liegt das Gelenkteil 14 an der dem Kopf 11 abgekehrten Seite der Spannbacke 9 an. Das Gelenkteil 13 ist auf seiner den Kopf 11 abstützenden Seite abgeflacht und im übrigen als massiver, teilzylindrischer Bolzen ausgebildet, der ein radial durchgehendes, gewindefreies Loch zur Durchführung des Spannschraubenschaftes 12 aufweist. Das Gelenkteil 14 ist dagegen als vollständig kreiszylindrischer Bolzen ausgebildet. Alternativ könnte aber auch das Gelenkteil 14 auf der der Spannbacke 9 abgekehrten Seite abgeflacht sein. Es hat ebenfalls ein durchgehendes Loch, das jedoch mit Gewinde versehen ist, in das die Spannschraube 10 ein- und hindurchgeschraubt werden kann. Statt als massive Bolzen können die Gelenkteile 13, 14 auch als Hülsen mit gleicher Querschnittskontur wie die Bolzen ausgebildet sein, wobei das als Hülse ausgebildete Gelenkteil 14 dann zwei diametral in der Hülsenwand ausgebildete Löcher aufweist, von denen wenigstens das eine Loch ein Gewinde zur Aufnahme des Spannschraubenschaftes 12 aufweist. Die Gelenkteile 13 und 14 sind aufgrund ihrer zumindest teilweise kreiszylindrischen Form an den Seiten der Spannbacken zwischen den Wänden 17 einerseits und den Wänden 18 andererseits drehbar. Die Spannschraube 10 wird daher beim Spannen der Rohrschelle kaum auf Biegung beansprucht.

Die Spannbacken 8 und 9 bilden etwa sattel- oder walmdachartige Vorsprünge 19 und 20, deren Firste 21 und 22 sich in Axialrichtung der Rohrschelle erstrecken und kürzer als die Spannbacken 8, 9 in Axialrichtung breit sind. Dies ergibt eine in sich sehr steife Form der Spannbacken 8, 9. Sodann sind die Spannbacken 8, 9 mit sich vom Schellenband 7 weg erstreckenden Langlöchern 25 (Fig. 5) versehen, deren Länge so gewählt ist, daß ihre radial äußeren Enden im gespannten Zustand der Rohrschelle nicht am Spannschraubenschaft 12 anliegen. Der Spannschraubenschaft 12 wird daher beim Spannen der Rohrschelle auch nicht durch die Langlöcher 25 auf Biegung beansprucht.

Der Spannschraubenkopf 11 kann beliebig geformt sein, sei es mit Außen- oder Innenmehrkant, in Torx-Form, wie dargestellt, und/oder mit einem Spannschraubenschlitz.

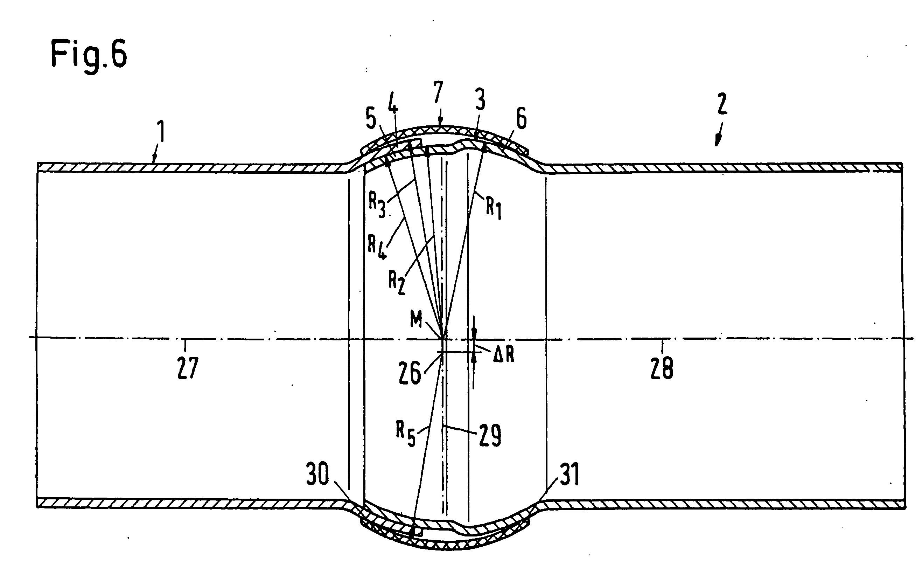

Nach Fig. 6 besteht ein wesentliches Merkmal der Rohrschelle darin, daß der Innenradius R₅ des Schellenbandes 7 um eine Querachse 26, die bei koaxial zusammengesteckten Rohren 1, 2 und an den Endabschnitten 3, 4 der Rohre 1, 2 ungespannt anliegendem Schellenband 7 in einer senkrecht zu den koaxialen Mittelachsen 27, 28 der Rohre 1, 2 stehenden Mittelebenen 29 des Schellenbandes 7 in einem Abstand ΔR vom Mittelpunkt M der Kugelzonen 4-6 liegt, um so viel kleiner als der Außenradius R₁ beziehungsweise R₃ der Kugelzonen 4, 6 ist, daß die Summe aus dem Abstand ΔR und dem Innenradius R₅ größer als der Außenradius R₁ oder R₃ der Kugelzonen 4, 6 ist.

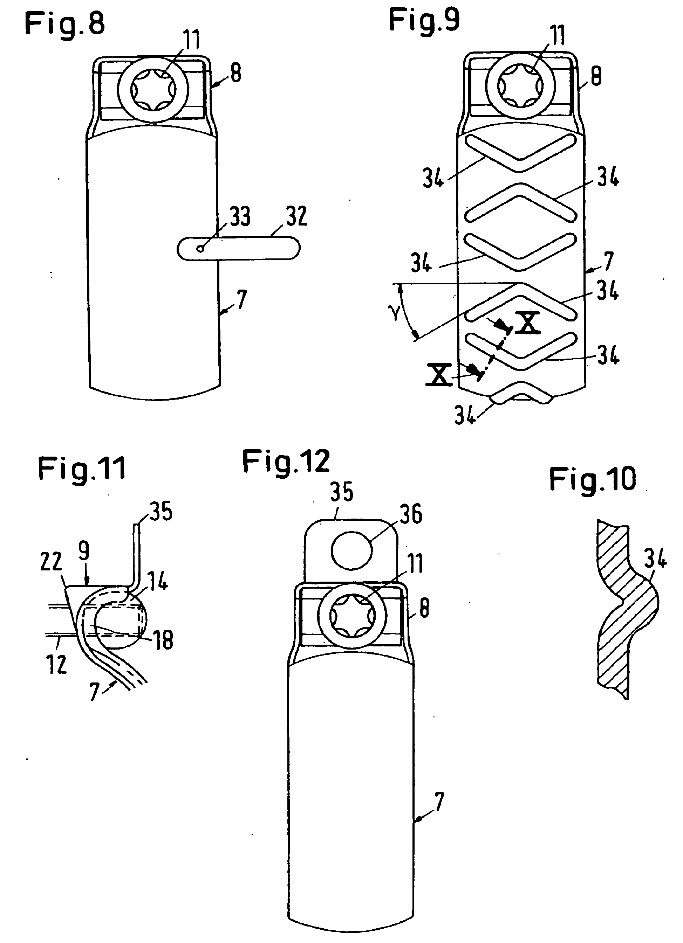

Bei dieser Ausbildung liegt die Rohrschelle vor dem endgültigen Spannen gemäß Fig. 6 nur mit ihren inneren Umfangsrändern 30 und 31 an den Kugelzonen 4 und 6 an. Beim Spannen übt die Rohrschelle daher axial gegeneinander gerichtete Komponenten der Spannkraft aufgrund der runden Außenflächen der Kugelzonen 4 und 6 auf die Rohre 1, 2 aus, bis das Schellenband 7 unter geringförmiger Aufbiegung in der Endlage nach Fig. 7 großflächig und weitgehend dicht an den Kugelzonen 4 und 6 anliegt und das Schellenband ebenfalls eine Kugelzone bildet, in der ihr Krümmungsmittelpunkt mit dem Mittelpunkt M zusammenfällt und ihr Innenradius R'₅ den Außenradien R₁ und R₃ der Kugelzonen 3 und 4 gleicht. Die Rohre 1, 2 werden dadurch fest und gleichzeitig weitgehend dicht zusammengehalten. Dabei sind die Abmessungen des Schellenbandes 7 in Bezug auf die äußeren Nenndurchmesser beziehungsweise Radien R₁ und R₃ der Kugelzonen 4 und 6 so gewählt, daß die schrägen Seiten 23 und 24 der Spannbacken 8 und 9 weiterhin nicht aneinander anliegen und die Spannbacken 8 und 9 aufgrund ihrer, wenn auch geringen, Elastizität eine Vorspannung auf die Spannschraube 10 ausüben. Dies trägt zur Lagesicherheit und Verliersicherheit der Spannschraube 10 bei. Außerdem sind die inneren Umfangsränder 30 und 31 des Schellenbandes 7 abgerundet. Sie dringen daher nicht in das Rohrmaterial ein. Das Schellenband 7 kann sich folglich mit geringerer Spannkraft als bei nicht abgerundeten Rändern an die Kugelzonen 4 und 6 anpassen, wie es in Fig. 7 dargestellt ist.

Die Wände 17 und 18 der Spannbacken 8 und 9 sind gemäß Fig. 3 und 4 um einen kleinen Winkel β schräg nach au-βen gerichtet. Dies erleichtert das Einführen der Gelenkteile 13 und 14 zwischen die Wände 17 beziehungsweise 18. Zusätzlich können die Kanten der Wände 17 und 18 ebenfalls wie die Ränder 30 und 31 des Schellenbandes 7 innen und außen abgerundet sein und die Gelenkteile 13 und 14 an den Rändern ihrer Enden mit einer Fase versehen sein, um das Einführen der Gelenkteile 13 und 14 zwischen den Wänden 17 beziehungsweise 18 zu erleichtern.

Bei der Abwandlung der Rohrschelle nach Fig. 8 ist eine Lasche 32 durch eine Punktschweißung 33 mit dem Schellenband 7 verbunden. Diese Lasche 32 ermöglicht eine Vormontierung der Rohrschelle auf einem der Rohre 1 und 2, zum Beispiel ebenfalls durch Punktschweißung der Lasche 32 am Rohr. Dies erleichtert die Endmontage der Rohrschelle.

Gemäß Fig. 9 kann das Schellenband 7 in ihrer Umfangsrichtung mit gegensinnig unter einem spitzen Winkel γ zu einer Querebene gepfeilten Sicken 34 versehen sein, deren Querschnittsform in Fig. 10 dargestellt ist. Diese Sicken 34 versteifen das Schellenband 7, so daß es beim öffnen der Rohrschelle um so sicherer wieder seine ursprüngliche Form einnimmt, die es vor dem Spannen hatte. Die Rohrschelle kann daher wiederholt ohne bleibende Verformung benutzt werden. Hierzu trägt auch die steife Form der Spannbacken bei.

Bei der Abwandlung nach den Fig. 11 und 12 ist die eine Spannbacke 9 am einen Ende des Schellenbandes 7 mit einer nach außen abstehenden, einstückig mit dem Schellenband 7 ausgebildeten Lasche 35 mit einem durchgehenden Loch 36 zur Befestigung der Rohrschelle am Chassis des Kraftfahrzeugs versehen. Die Rohrschelle kann daher gleichzeitig zur Aufhängung der Abgas-Rohrleitung genutzt werden.

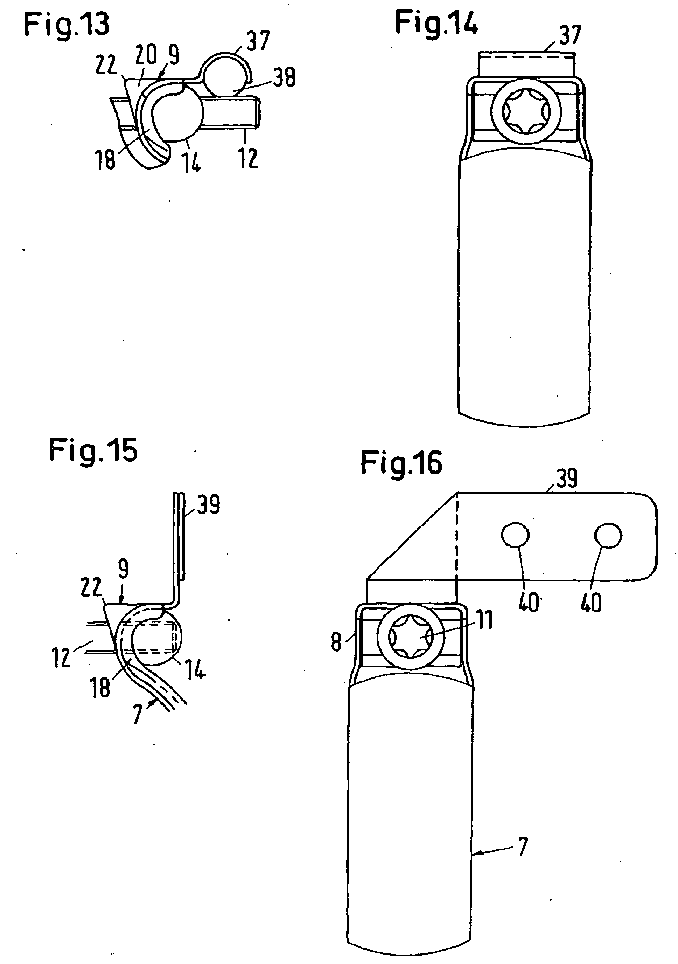

Bei der Abwandlung der Rohrschelle nach den Fig. 13 und 14 hat die Spannbacke 9, an der sich das mit Innengewinde im quer durchgehenden Loch versehene Gelenkteil 14 zwischen den Wänden 18 abstützt, einen Fortsatz 37. Der Fortsatz 37 erstreckt sich über das Gelenkteil 14 hinaus und ist über dem das Gelenkteil 14 durchsetzenden freien Endabschnitt des Schraubenschaftes 12 gebogen. Er übergreift ein Halterungsteil 38, hier einen am Fahrzeug befestigten Rundbolzen (eine Schraube oder dergleichen), so daß es zwischen dem Spannschraubenschaft 12 und dem Fortsatz 37 eingeklemmt wird. Dies ergibt eine Verliersicherung der Spannschraube 10 bevor sie gespannt wird. Gleichzeitig können die Rohre 1, 2 mittels der Rohrschelle am Fahrzeug aufgehängt werden, ohne zusätzliche Teile an der Rohrschelle befestigen zu müssen.

Bei der Abwandlung nach den Fig. 15 und 16 ist die Spannbacke 9 ebenso wie bei der Abwandlung nach den Fig. 11 und 12 mit einer Lasche 39 zur Befestigung 39 der Rohrschelle am Chassis des Fahrzeugs versehen. Diese Lasche 39 ist jedoch zusätzlich um 90° abgewinkelt, um sie an einer anderen Stelle des Chassis mittels die Löcher 40 durchsetzender Schrauben zu befestigen.

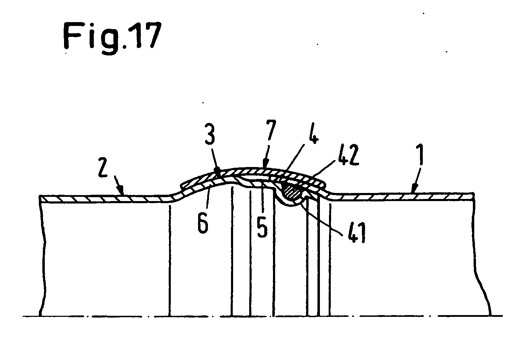

Nach Fig. 17 ist die Kugelzone 5 mit einer außen umlaufenden Ringnut 41 versehen, in der ein Dichtring 42, hier ein O-Ring, angeordnet ist, der an der Innenseite des Aufnahmeabschnitts 4 anliegt, wenn die Rohre 1, 2 mit der Rohrschelle verbunden sind. Der Dichtring 42 sorgt für eine zusätzliche Abdichtung der Verbindung gegenüber noch höheren Fluiddrücken in den Rohren als ohne den Dichtring 42, und wenn die Fluide nicht, wie zum Beispiel rußhaltige Abgase eines Dieselmotors, selbst im Laufe der Zeit für eine zusätzliche Abdichtung sorgen. Bei Rohrverbindungen mit größeren Durchmessern und größeren Kugelzonen 5, 6 kann erforderlichenfalls eine weitere Ringnut mit einem Dichtring in der Kugelzone 5 vorgesehen sein. Als Dichtringmaterial ist beispielsweise Gummi, Teflon, Graphit, Kupfer oder Dichtpaste besonders geeignet.

## Patentansprüche

1. Verbindungsanordnung aus einer Rohrschelle und zwei Rohren (1, 2), insbesondere Rohren (1, 2) einer Kraftfahrzeug-Abgasrohrleitung, die teilweise ineinander steckbare Endabschnitte (3, 4) aufweisen, einen Einsteck- und einen Aufnahme-Endabschnitt (3, 4), wobei der Einsteck-Endabschnitt (3) in zwei Kugelzonen (5, 6) unterteilt ist, von denen die an das freie Ende des Einsteck-Endabschnitts (3) angrenzende erste Kugelzone(5) einen Außenradius (R₂) hat, der gleich dem Innenradius (R₄) des ebenfalls als Kugelzone geformten Aufnahme-Endabschnitts (4) ist, und in den Aufnahme-Endabschnitt (4) einsteckbar ist, und die zweite Kugelzone (6) des Einsteck-Endabschnitts (3) einen Außenradius (R₁) hat, der gleich dem Außenradius (R₃) des Aufnahme-Endabschnitts (4) ist, wobei die Rohrschelle ein bei zusammengesteckten Rohren (1, 2) um den Aufnahme-Endabschnitt (4) und die zweite Kugelzone (6) herumlegbares Schellenband (7), das um eine Querachse (26) gekrümmt ist, die bei koaxial zusammengesteckten Rohren (1, 2) und an den Endabschnitten (3, 4) der Rohre (1, 2) ungespannt anliegendem Schellenband (7) in einer senkrecht zu den koaxialen Mittelachsen (27, 28) der Rohre (1, 2) stehenden Mittelebene (29) des Schellenbandes (7) liegt, mit nach außen abstehenden Spannbacken (8, 9) und eine durch Löcher (25) in den Spannbakken (8, 9) hindurchgeführte Spannschraube (10) aufweist, die sich einerseits mit einem Kopf (11) an der einen der einander abgekehrten Seiten der Spannbacken (8, 9) und andererseits über ein mit einer Gewindebohrung versehenes Zwischenteil (14), in dessen Gewindebohrung die Spannschraube (10) eingreift, an der anderen Seite abstützt, **dadurch gekennzeichnet, daß** die Querachse (26), um die das ungespannte Schellenband (7) gekrümmt ist, einen Abstand (ΔR) vom Mittelpunkt (M) der Kugelzonen (4, 5, 6) aufweist und der Innenradius (R₅) der Krümmung des ungespannten Schellenbandes (7) um diese Querachse (26) um so viel kleiner als der erwähnte Außenradius (R₁; R₃) der Kugelzonen (4, 6) ist, daß die Summe aus dem Abstand (ΔR) und dem Innenradius (R₅) dieser Krümmung größer als der Außenradius (R₁; R₃) der Kugelzonen (4, 6) ist.

2. Verbindungsanordnung nach Anspruch 1, **dadurch gekennzeichnet, daß** zumindest die inneren Umfangsränder (30, 31) des Schellenbandes (7) abgerundet sind.

3. Verbindungsanordnung nach Anspruch 1 oder 2, **dadurch gekennzeichnet, daß** die Spannbacken (8, 9) einstückig mit dem Schellenband (7) ausgebildet sind.

4. Verbindungsanordnung nach Anspruch 3, **dadurch gekennzeichnet, daß** axiale Randbereiche (15, 16) der Spannbacken (8, 9) teilkreisförmig voneinander weggebogen sind und axial äußere, teilkreisförmig voneinander weggebogene Wände (17, 18) bilden, zwischen denen an der dem Spannschraubenkopf (11) zugekehrten Seite der betreffenden Spannbacke (8) sowie zwischen dieser Seite und dem Spannschraubenkopf (11) ein zumindest auf seiner der Spannbacke (8) zugekehrten Seite zylindrisches Gelenkteil (13) drehbar anliegt, das ein durchgehendes Loch zur Durchführung des Spannschraubenschaftes (12) aufweist, und daß das Zwischenteil (14) ebenfalls zumindest auf seiner an der anderen Spannbacke (9) anliegenden Seite zylindrisch ist und als Gelenkteil drehbar anliegt.

5. Verbindungsanordnung nach Anspruch 4, **dadurch gekennzeichnet, daß** die Gelenkteile (13, 14) als massive Gelenkbolzen oder als Gelenkhülsen ausgebildet sind.

6. Verbindungsanordnung nach Anspruch 4 oder 5, **dadurch gekennzeichnet, daß** zumindest die am Spannschraubenkopf (11) anliegende Seite der voneinander abgekehrten Seiten der Gelenkteile (13, 14) eben ist.

7. Verbindungsanordnung nach einem der Ansprüche 4 bis 6, **dadurch gekennzeichnet, daß** die Spannbacken (8, 9) dachartige Vorsprünge (19, 20) aufweisen, deren Firste (21, 22) sich in Axialrichtung der Rohrschelle erstrecken und deren der jeweils anderen Spannbacke (8; 9) gegenüberliegende Seiten (23, 24) zueinander hin geneigt sind, so daß sie jeweils mit einer Querebene der Spannschraube (10) einen spitzen Winkel (α) einschließen.

8. Verbindungsanordnung nach Anspruch 7, **dadurch gekennzeichnet, daß** die Firste (21, 22) der Vorsprünge (19, 20) kürzer als die Spannbacken (8, 9) in Axialrichtung breit sind.

9. Verbindungsanordnung nach einem der Ansprüche 1 bis 8, **dadurch gekennzeichnet, daß** die Löcher in den Spannbacken (8, 9) sich vom Schellenband (7) nach außen erstreckende Langlöcher (25) sind, deren Länge so gewählt ist, daß ihre äußeren Enden im gespannten Zustand der Rohrschelle nicht am Spannschraubenschaft (12) anliegen.

10. Verbindungsanordnung nach einem der Ansprüche 1 bis 9, **dadurch gekennzeichnet, daß** die Rohrschelle eine Lasche (32; 35; 39) aufweist, mittels der die Rohrschelle an einem der Rohre (1, 2) zumindest bis zur Endmontage vormontiert oder die Rohrschelle ortsfest, insbesondere am Chassis eines Kraftfahrzeugs befestigt werden kann.

11. Verbindungsanordnung nach Anspruch 10, **dadurch gekennzeichnet, daß** die Lasche am Schellenband angeschweißt oder einstückig mit diesem ausgebildet ist.

12. Verbindungsanordnung nach einem der Ansprüche 1 bis 11, **dadurch gekennzeichnet, daß** das Schellenband (7) mit Versteifungssicken (34) versehen ist.

13. Verbindungsanordnung nach einem der Ansprüche 1 bis 12, **dadurch gekennzeichnet, daß** die Spannbacke (9), an der sich das Zwischenstück (14) abstützt, einen sich über das Zwischenstück (14) hinaus erstreckenden und über dem das Zwischenstück (14) durchsetzenden freien Endabschnitt des Schraubenschaftes (12) gebogenen Fortsatz (37) zum Einklemmen eines Halterungsteils (38) am Spannschraubenschaft (12) aufweist.

14. Verbindungsanordnung nach einem der Ansprüche 1 bis 13, **dadurch gekennzeichnet, daß** die an das freie Ende des Einsteck-Endabschnitts (3) angrenzende erste Kugelzone (5) wenigstens eine außen umlaufende Ringnut (41) mit jeweils einem darin angeordneten Dichtring (42) aufweist, der an der Innenseite des Aufnahmeabschnitts (4) anliegt.

## Claims

1. Connecting arrangement, consisting of a pipe clamp and two pipes (1, 2), in particular pipes (1, 2) of a motor vehicle exhaust pipe line, having end sections (3, 4), an insertion and a receiving end section (3, 4), which can be partially inserted into one another, the insertion end section (3) being divided into two spherical zones (5, 6), of which the first spherical zone (5), bordering on the open end of the insertion end section (3), has an outer radius (R₂), which is identical to the inner radius (R₄) of the receiving end section (4), likewise formed as a spherical zone, and can be inserted into the receiving end section (4), and the second spherical zone (6) of the insertion end section (3) has an outer radius (R₁) which is identical to the outer radius (R₃) of the receiving end section (4), the pipe clamp having a clamp band (7), which can be placed round the receiving end section (4) and the second spherical zone (6) when the pipes (1, 2) are put together and is curved about a transverse axis (26), which, when the pipes (1, 2) are put together coaxially and the clamp band (7) is resting untensioned against the end sections (3, 4) of the pipes (1, 2), is located in a central plane (29) of the clamp band (7) standing perpendicular to the coaxial central axes (27, 28) of the pipes (1, 2), with clamping jaws (8, 9), projecting outwards, and a clamping screw (10) guided through holes (25) in the clamping jaws (8, 9), which is supported on the one hand by a head (11) on one of the sides of the clamping jaws (8, 9) facing away from one another and on the other hand on the other side via an intermediate piece (14), provided with a threaded bore, in the threaded bore of which the clamping screw (10) engages, **characterised in that** the transverse axis (26), about which the untensioned clamp band (7) is curved is at a distance (ΔR) from the central point (M) of the spherical zones (4, 5, 6) and the inner radius (R₅) of the curve of the untensioned clamp band (7) about this transverse axis (26) is smaller than the outer radius (R₁; R₃) of the spherical zones (4, 6) mentioned, by the same amount that the sum of the distance (ΔR) and the inner radius (R₅) of this curve is greater than the outer radius (R₁; R₃) of the spherical zones (4, 6) .

2. Connecting arrangement according to claim 1, **characterised in that** at least the inner circumferential edges (30, 31) of the clamp band (7) are rounded.

3. Connecting arrangement according to claim 1 or 2, **characterised in that** the clamping jaws (8, 9) are constructed in one piece with the clamp band (7).

4. Connecting arrangement according to claim 3, **characterised in that** axial edge areas (15, 16) of the clamping jaws (8, 9) are bent away from one another in a semi-circle and form axial outer walls (17, 18) bent away from one another in a semi-circle, between which, on the side of the clamping jaw (8) concerned facing the clamping screw head (11) and between this side and the clamping screw head (11), an articulated part (13), which is cylindrical at least on its side facing the clamping jaw (8), rests rotatably, which has a continuous hole for conducting through the clamping screw shank (12) and **in that** the intermediate part (14) is likewise cylindrical and rests rotatably as an articulated part at least on its side resting against the other clamping jaw (9).

5. Connecting arrangement according to claim 4, **characterised in that** the articulated parts (13, 14) are constructed as solid articulated pins or as articulated sleeves.

6. Connecting arrangement according to claim 4 or 5, **characterised in that** at least the side resting against the clamping screw head (11) of the sides of the articulated parts (13, 14) facing away from one another is flat.

7. Connecting arrangement according to one of claims 4 to 6, **characterised in that** the clamping jaws (8, 9) have roof-like projections (19, 20), the ridges (21, 22) of which extend in the axial direction of the pipe clamp and the sides (23, 24) of which opposite the other clamping jaw (8; 9) in each case are inclined towards one another, so they in each case enclose an acute angle (α) with a transverse plane of the clamping screw (10).

8. Connecting arrangement according to claim 7, **characterised in that** the ridges (21, 22) of the projections (19, 20) are shorter than the clamping jaws (8, 9) are wide in the axial direction.

9. Connecting arrangement according to one of claims 1 to 8, **characterised in that** the holes in the clamping jaws (8, 9) are elongated holes (25) extending outwards from the clamp band (7), the length of which is chosen such that their outer ends do not rest against the clamping screw shank (12) in the tensioned state of the pipe clamp.

10. Connecting arrangement according to one of claims 1 to 9, **characterised in that** the pipe clamp has a bracket (32; 35; 39), by means of which the pipe clamp is preassembled on one of the pipes (1, 2) at least by final assembly or the pipe clamp can be fixed as stationery, in particular to the chassis of a motor vehicle.

11. Connecting arrangement according to claim 10, **characterised in that** the bracket is welded to the clamp band or constructed in one piece with it.

12. Connecting arrangement according to one of claims 1 to 11, **characterised in that** the clamp band (7) is provided with reinforcing beads (34).

13. Connecting arrangement according to one of claims 1 to 12, **characterised in that** the clamping jaw (9) on which the intermediate piece (14) is supported has an extension (37) extending beyond the intermediate piece (14) and bent over the open end section of the screw shank (12) passing through the intermediate piece (14) to clamp a holding part (38) to the clamping screw shank (12).

14. Connecting arrangement according to one of claims 1 to 13, **characterised in that** the first spherical zone (5) bordering on the open end of the insertion end section (3) has at least one annular groove (41), circulating on the outside, with, arranged therein in each case, a sealing ring (42) which rests against the inside of the receiving section (4).

## Revendications

1. Agencement de liaison formé d'un collier pour tube et de deux tubes (1, 2), en particulier les tubes (1, 2) d'une conduite tubulaire à gaz d'échappement pour véhicule automobile, qui comprend des embouts (3, 4) en partie enfichables l'un dans l'autre, à savoir un embout enfichable et un embout de logement (3, 4), l'embout enfichable (3) étant subdivisé en deux zones sphériques (5, 6) dont la première zone sphérique (5) adjacente à l'extrémité libre de l'embout enfichable (3) présente un rayon extérieur (R₂) qui est égal au rayon intérieur (R₄) de l'embout de logement (4) formé également comme zone sphérique, et est enfichable dans l'embout de logement (4), et la seconde zone sphérique (6) de l'embout enfichable (3) présente un rayon extérieur (R₁) qui est égal au rayon extérieur (R₃) de l'embout de logement (4), le collier pour tube comprenant une bande de collier (7) susceptible d'être posée autour de l'embout de logement (4) et de la seconde zone sphérique (6) lorsque les tubes (1, 2) sont mutuellement enfichés, bande qui est incurvée autour d'un axe transversal (26) qui, les tubes (1, 2) étant mutuellement enfichés coaxialement et la bande de collier (7) étant appliquée sans contrainte sur les embouts (3, 4) des tubes (1, 2), se trouve dans un plan médian (29) de la bande de collier (7) situé perpendiculairement aux axes médians coaxiaux (27, 28) des tubes (1, 2), comprenant des mâchoires de serrage (8, 9) faisant saillie vers l'extérieur et une vis de serrage (10) passant à travers des trous (25) dans les mâchoires de serrage (8, 9), vis qui prend appui d'une part par une tête (11) contre l'un des côtés, détournés l'un de l'autre, des mâchoires de serrage (8, 9) et d'autre part contre l'autre côté via un élément intermédiaire (14) pourvu d'un taraudage dans lequel vient s'engager la vis de serrage (10), **caractérisé en ce que** l'axe transversal (26) autour duquel la bande de collier (7) non contrainte est incurvée présente une distance (ΔR) au centre (M) des zones sphériques (4, 5, 6) et le rayon intérieur (R₅) de la courbure de la bande de collier (7) non contrainte autour de cet axe transversal (26) est plus petit que ledit rayon extérieur (R₁; R₃) des zones sphériques (4, 6) d'une valeur telle que la somme de la distance (ΔR) et du rayon intérieur (R₅) de cette courbure est plus grande que le rayon extérieur (R₁; R₃) des zones sphériques (4, 6).

2. Agencement de liaison selon la revendication 1, **caractérisé en ce que** au moins les bords périphériques intérieurs (30, 31) de la bande de collier (7) sont arrondis.

3. Agencement de liaison selon la revendication 1 ou 2, **caractérisé en ce que** les mâchoires de serrage (8, 9) sont réalisées d'un seul tenant avec la bande de collier (7).

4. Agencement de liaison selon la revendication 3, **caractérisé en ce que** des zones de bordure axiales (15, 16) des mâchoires de serrage (8, 9) sont cintrées en éloignement l'une de l'autre en forme de cercle partiel et forment des parois (17, 18) axialement extérieures cintrées en éloignement l'une de l'autre en forme de cercle partiel entre lesquelles, sur le côté de la mâchoire de serrage concernée (8) tourné vers la tête de vis de serrage (11) ainsi qu'entre ce côté et la tête de vis de serrage (11) prend appui avec faculté de rotation un élément d'articulation (13) cylindrique au moins sur son côté tourné vers la mâchoire de serrage (8), élément qui présente un trou continu pour faire passer la tige (12) de la vis de serrage, et **en ce que** l'élément intermédiaire (14) est également cylindrique au moins sur son côté prenant appui contre l'autre mâchoire de serrage (9) et prend appui avec faculté de rotation à titre d'élément d'articulation.

5. Agencement de liaison selon la revendication 4, **caractérisé en ce que** les éléments d'articulation (13, 14) sont réalisés sous forme de pivots d'articulation massifs ou sous forme de douilles d'articulation.

6. Agencement de liaison selon la revendication 4 ou 5, **caractérisé en ce qu'**au moins le côté, prenant appui contre la tête de vis de serrage (11), des côtés détournés l'un de l'autre des éléments d'articulation (13, 14) est plan.

7. Agencement de liaison selon l'une des revendications 4 à 6, **caractérisé en ce que** les mâchoires de serrage (8, 9) présentent des saillies en forme de toiture (19, 20) dont les faîtes (21, 22) s'étendent en direction axiale du collier pour tube et dont les côtés (23, 24) opposés à l'autre mâchoire de serrage respective (8 ; 9) sont inclinés l'un vers l'autre, de manière à définir chacun avec un plan transversal de la vis de serrage (10) un angle aigu (α).

8. Agencement de liaison selon la revendication 7, **caractérisé en ce que** les faîtes (21, 22) des saillies (19, 20) sont plus courts que la largeur des mâchoires de serrage (8, 9) en direction axiale.

9. Agencement de liaison selon l'une des revendications 1 à 8, **caractérisé en ce que** les trous dans les mâchoires de serrage (8, 9) sont des trous oblongs (25) s'étendant depuis la bande de collier (7) vers l'extérieur, dont la longueur est choisie telle que leurs extrémités extérieures ne prennent pas appui contre la tige (12) de la vis de serrage dans l'état serré du collier pour tube.

10. Agencement de liaison selon l'une des revendications 1 à 9, **caractérisé en ce que** le collier pour tube comprend une patte (32 ; 35 ; 39), au moyen de laquelle le collier pour tube est prémonté sur l'un des tubes (1, 2) au moins jusqu'au montage final ou au moyen de laquelle le collier pour tube peut être fixé de façon stationnaire, en particulier sur le châssis d'un véhicule automobile.

11. Agencement de liaison selon la revendication 10, **caractérisé en ce que** la patte est soudée sur la bande de collier ou réalisée d'un seul tenant avec celle-ci.

12. Agencement de liaison selon l'une des revendications 1 à 11, **caractérisé en ce que** la bande de collier (7) est pourvue de moulures de rigidification (34).

13. Agencement de liaison selon l'une des revendications 1 à 12, **caractérisé en ce que** la mâchoire de serrage (9) contre laquelle prend appui l'élément intermédiaire (14) comprend un prolongement (37) s'étendant au-delà de l'élément intermédiaire (14) et cintré par-dessus l'embout libre de la tige de vis (12) traversant l'élément intermédiaire (14), qui est destiné à serrer un élément de retenue (38) sur la tige (12) de la vis de serrage.

14. Agencement de liaison selon l'une des revendications 1 à 13, **caractérisé en ce que** la première zone sphérique (5) adjacente à l'extrémité libre de l'embout enfichable (3) présente au moins une gorge annulaire périphérique extérieure (41) munie d'un anneau d'étanchéité (42) agencé dans celle-ci, qui prend appui contre le côté intérieur de l'embout de logement (4).
